# EUROPÄISCHE PATENTSCHRIFT

(11) **EP 2 403 915 B1**
(45) Veröffentlichungstag und Bekanntmachung des Hinweises auf die Patenterteilung: **03.09.2014**
(21) Anmeldenummer: 10704933.0
(22) Anmeldetag: 19.02.2010
(51) Int. Cl.: C08G 77/16, C09J 183/04, C09J 7/02, C08G 77/18

(54) **KLEBEBAND, INSBESONDERE ZUR VERKLEBUNG VON PHOTOVOLTAIKLAMINATEN**
ADHESIVE TAPE, IN PARTICULAR FOR BONDING PHOTOVOLTAIC LAMINATES
BANDE ADHÉSIVE, EN PARTICULIER POUR LE COLLAGE DE STRATIFIÉS PHOTOVOLTAÏQUES

(30) Priorität: 04.03.2009 DE 102009011164
(43) Veröffentlichungstag der Anmeldung: 11.01.2012
(73) Patentinhaber: TESA SE, 20253 Hamburg (DE)
(72) Erfinder: UTESCH, Nils, 201107 Shanghai (CN); HERRMANN, Alexander, 22529 Hamburg (DE); BURMEISTER, Axel, 22527 Hamburg (DE)
(86) Internationale Anmeldenummer: PCT/EP2010/052087
(87) Internationale Veröffentlichungsnummer: WO 2010/100037

(56) Entgegenhaltungen:
- EP-A1- 0 529 546
- WO-A1-90/13416
- WO-A1-2007/011540
- WO-A2-2007/011538
- DATABASE WPI Week 200666 Thomson Scientific, London, GB; AN 2006-630626 XP002583260 & JP 2006 225420 A (SHINETSU CHEM CO LTD) 31. August 2006 (2006-08-31)

## Beschreibung

Die Erfindung betrifft ein Klebeband insbesondere zur Verklebung optoelektronischer Bauteile, besonders bevorzugt von Photovoltaiklaminaten, gemäß dem Oberbegriff von Anspruch 1.

Elektronische und optoelektronische Anordnungen werden immer häufiger in kommerziellen Produkten verwendet oder stehen kurz vor der Markteinführung. Der Begriff Optoelektronik (manchmal auch Optronik oder Optotronik genannt) entstand aus der Kombination von Optik und Mikroelektronik und umfasst im weitesten Sinne alle Produkte und Verfahren, die die Umwandlung von elektronisch erzeugten Daten und/oder Energie in Lichtemission ermöglichen und umgekehrt. Derartige Anordnungen umfassen anorganische oder organische elektronische Strukturen, beispielsweise organische, metallorganische oder polymere Halbleiter oder auch Kombinationen dieser. Diese Anordnungen und Produkte sind je nach gewünschter Anwendung starr oder flexibel ausgebildet. Als technische Herausforderung für die Realisierung einer ausreichenden Lebensdauer und Funktion von (opto-)elektronischen Anordnungen im Bereich der anorganischen und/oder organischen (Opto-)Elektronik, ganz besonders im Bereich der organischen (Opto-)Elektronik ist ein Schutz der darin enthaltenen Komponenten vor Permeanten zu sehen. Permeanten können eine Vielzahl von niedermolekularen organischen oder anorganischen Verbindungen sein, insbesondere Wasserdampf und Sauerstoff.

Eine Vielzahl von (opto-)elektronischen Anordnungen im Bereich der anorganischen und/oder organischen (Opto-)Elektronik ist insbesondere gegen Wasserdampf empfindlich. Während der Lebensdauer der elektronischen Anordnung ist deshalb ein Schutz durch eine Verkapselung erforderlich, da andernfalls die Leistung über den Anwendungszeitraum nachlässt. So kann sich beispielsweise durch eine Oxidation der Bestandteile etwa bei lichtemittierenden Anordnungen wie Elektrolumineszenz-Lampen (EL-Lampen) oder organischen Leuchtdioden (OLED) die Leuchtkraft, bei elektrophoretischen Displays (EP-Displays) der Kontrast oder bei Solarzellen die Effizienz innerhalb kürzester Zeit drastisch verringern.

Ein nach dem Stand der Technik gängiger Ansatz ist deshalb, die elektronische Anordnung zwischen zwei für Permeanten, insbesondere Wasserdampf, undurchlässige Substrate zu legen. Für unflexible Aufbauten werden überwiegend Glas- oder Metallsubstrate verwendet, die eine hohe Permeationsbarriere bieten. Für flexible Anordnungen hingegen kommen Flächensubstrate wie transparente oder nicht transparente Folien zum Einsatz, die mehrlagig ausgeführt sein können. Hierbei können sowohl Kombinationen aus verschiedenen Polymeren als auch anorganische und/oder organische Schichten verwendet werden. Dabei sind für die verschiedenen Anwendungen und verschiedenen Seiten unterschiedlichste Substrate wie z.B. Folien, Gewebe, Vliese und Papiere oder Kombinationen daraus möglich.

Um bei besonders empfindlichen (opto-)elektronischen Bauteilen wie OLEDs auch eine gute Randversiegelung zu erzielen, werden reaktive Klebstoffe verwendet. Ein guter Klebstoff weist eine geringe Permeabilität insbesondere gegen Sauerstoff und Wasserdampf auf, hat eine ausreichende Haftung auf der Anordnung und kann gut auf diese auffließen. Eine geringe Haftung auf der Anordnung verringert die Barrierewirkung, wenn dadurch der Eintritt von Sauerstoff und Wasserdampf an der Grenzfläche zwischen Substrat und Klebstoff ermöglicht wird. Im Gegensatz zu optoelektronischen Bauteilen, welche sauerstoffempfindliche organische Verbindungen enthalten, wird bei der Fertigung von Solarmodulen keine Randversiegelung mit einem Klebstoff oder gar ein Klebeband mit einer Barrierefolie durchgeführt, weil bis dato kein Bedarf erschien. Man ging bisher davon aus, dass keine Barriere gegen Sauerstoff benötigt wird, da die Seitenkanten des Laminats vor (Regen-)Wasser ausreichend geschützt sind, indem das Laminat am Rand mittels einer aushärtbaren Flüssigsilicondichtmasse oder einem Schaumstoffklebeband in einen Aluminiumrahmen eingeklebt wird.

Für die Verkapselung von (opto-)elektronischen Bauteilen wie OLEDs wurden bisher vor allem Flüssigklebstoffe und Adhäsive auf Basis von Epoxiden verwendet (WO98/21287 A1; US 4,051,195 A; US 4,552,604 A). Diese weisen durch eine starke Vernetzung eine geringe Permeabilität auf. Ihr Haupteinsatzgebiet sind Randverklebungen starrer Anordnungen. Eine Aushärtung erfolgt thermisch oder mittels UV-Strahlung.

Besondere optoelektronische Bauteile sind Photovoltaik-Module. Unter Photovoltaik versteht man die direkte Umwandlung von Strahlungsenergie, vornehmlich Sonnenenergie, in elektrische Energie mit Hilfe von Solarzellen. Solarzellen gibt es in verschiedenen Ausführungsformen am weitesten verbreitet sind Dickschicht-Siliziumzellen entweder als monokristalline Zellen (c-Si) oder multikristalline Zellen (mc-Si). Vermehrt Verbreitung finden Dünnschichtzellen aus amorphem Silizium (a-Si), GaAs (Galliumarsenid), CdTe (Cadmiumtellurid), CIS (Kupfer, Indium, Selen), CIGS (Kupfer, Indium, Gallium, Selen), sowie organische Solarzellen und Farbstoffzellen.

Solarzellen werden zur Energiegewinnung meist zu großen Solarmodulen, den sog. PV-Modulen verschaltet. Die Zellen werden dafür mit Leiterbahnen an Vorder- und Rückseite in Reihe geschaltet. Dadurch addiert sich die Spannung der Einzelzellen. Zudem werden die Solarzellen üblicherweise als Laminat verarbeitet, insbesondere nämlich ober- und unterseitig mit einem Barrierematerial (Glas, Folien, etc.) versehen.

Die Fertigung eines Solarmoduls erfolgt häufig mit der optisch aktiven Seite nach unten. Regelmäßig wird dabei ein entsprechendes Glas gereinigt und bereitgelegt. Bei dem Glas handelt es sich üblicherweise um eisenarmes, gehärtetes Weißglas in 3 bis 4 mm Stärke mit möglichst geringer Absorption zwischen 350 nm und 1150 nm. Auf dieses Glas kommt dann eine zugeschnittene Bahn Ethylenvinylacetat-Folie (EVA-Folie). Die Solarzellen werden mittels Lötbändchen zu einzelnen Strängen (so genannte Strings) verbunden und auf der Oberseite dieser EVA-Folie positioniert. Nun werden die Querverbinder, die die einzelnen Strings miteinander verbinden sollen und zum Ort der Anschlussdose führen, positioniert und verlötet. Anschließend wird alles nacheinander mit zugeschnittenen EVA- und Polyvinylfluorid-Folien (z.B. Tedlar™) oder einem Verbund aus EVA, Polyester und Polyvinylfluorid bedeckt. Als nächster Produktionsschritt erfolgt das Laminieren des Moduls bei einem Unterdruck von ca. 20 mbar und ca. 150°C. Beim Laminieren bildet sich aus der bis dahin milchigen EVA-Folie eine klare, dreidimensional vernetzte und nicht mehr schmelzbare Kunststoffschicht in der die Solarzellen eingebettet sind und welche fest mit der Glasscheibe und der Rückseitenfolie verbunden ist. Nach dem Laminieren werden die Kanten gesäumt, die Anschlussdose gesetzt und mit Freilaufdioden bestückt. Damit ist das Laminat fertig.

PV-Module werden aus Stabilitätsgründen mit einem Rahmen, insbesondere einem Aluminiumrahmen, versehen, welcher zum einen der Montage und zum anderen dem Schutz der PV-Module vor Bruch durch zu starke Biegung dient. Die Verbindung zwischen Rahmen und dem Laminat, welches üblicherweise das Glas, polymerfolie, Rückseitenfolie und Solarzellen umfasst, wird beispielsweise durch die Applikation eines doppelseitigen Schaumstoffklebebandes gelöst. Dieses wird üblicherweise auf die Laminatkante verklebt und optional auch noch auf die Laminatunter- und/oder die Laminatoberseite umgeschlagen und dort angedrückt. Das so ausgerüstete Laminat wird dann mit sehr hoher Kraft in die Rahmennut gepresst. Das empfindliche Laminat ist, wie zuvor bereits beschrieben, regelmäßig an der Oberseite, also der optisch aktiven Seite, durch eine Glasschicht gegen Wasserdampf bzw. Wasser geschützt und an der Unterseite entweder durch eine zweite Glasschicht oder eine Folie bzw. einen Folienverbund mit Barrierewirkung. Die Laminatkanten sind hingegen nur durch das Schaumstoffklebeband gegen den Eintritt von Wasser geschützt. Mit wachsender Größe der PV-Module, insbesondere von nachgeführten Movermodulen, also Modulen, die mittels Motoren dem Sonnenstand nachgeführt werden, wird eine immer größere Kraft erforderlich, um die Laminate in die Rahmen zu pressen. Besonders kritisch ist das Verpressen an den Ecken des Laminats, denn bei Umschlagung oder Überlappung liegt das Klebeband hier mit doppelter Dicke vor. Beim Einpressen kann das Klebeband daher beschädigt werden, wodurch Risse im Schaum entstehen können, durch welche wiederum Regenwasser an die Laminatkante dringen kann. Dringt Wasser in das Laminat ein, kann die Haftung zwischen Glas und EVA verschlechtert werden. Es hat sich gezeigt, dass bei Modulen mit EVA-Verkapselungsfolien die Leistung des Moduls im Laufe der Zeit sinkt. Neben Vergilbung oder Trübung der EVA-Folie spielen als weitere Ursachen Korrosion der Lötverbindungen der Zellverbinder und Kriechströme eine Rolle. Durch Feuchtigkeit wird offenbar durch Hydrolyse von EVA Essigsäure frei, welche einerseits korrosiv ist und andererseits die Leitfähigkeit erheblich erhöht. Hierdurch kann es zu elektrischen Verlusten insbesondere zwischen Laminatkante und Rahmen kommt.

Die Verbindung zwischen Rahmen und dem Laminat kann alternativ zur Verklebung mit einem Schaumstoffklebeband durch das Einbringen von aushärtbaren Flüssigsilicon oder einen Flüssigklebstoff in die Rahmennut bewerkstelligt werden. Dies wiederum hat den Nachteil, dass das hervorquellende Silicon oder der Flüssigklebstoff mit Lösungsmitteln aufwendig entfernt werden muss. Darüber hinaus ist der Rahmen im Fall der Beschädigung der rückseitigen Barrierefolie des Laminats nicht mehr für Reparaturarbeiten entfernbar.

Aus dem Bereich der Rahmenfixierung von Glaselementen sind Klebebänder mit einem geschlossenzelligen Siliconschaumträger und beidseitiger Beschichtung mit einem kondensationsvernetzenden bzw. feuchtevernetzenden Silikonhaftklebstoff bekannt (WO2007/011540 bzw. EP0529546 A1). Auch Dichtungsbänder mit einem geschlossenzelligen Siliconschaumträger und einer Siliconhaftklebstoffschicht sind bekannt (WO90/13416).

Der vorliegenden Erfindung liegt damit das Problem zugrunde eine Möglichkeit zu schaffen die Kanten von Laminaten für PV-Module gleichzeitig mit dem Einkleben des Laminats vor Wasser / Wasserdampf zu schützen.

Gelöst wird diese Aufgabe durch ein Klebeband gemäß Patentanspruch 1. Bevorzugte Ausgestaltungen und Weiterbildungen sind Gegenstand der Unteransprüche.

Zur Lösung dieses Problems wird ein Klebeband vorgeschlagen, welches sich einfach applizieren lässt und einen ähnlich guten Schutz der Laminatkante vor dem Eindringen von Wasser / Wasserdampf gewährleistet wie die aufwendige Versiegelung mit Flüssigsilicon.

Es hat sich gezeigt, dass sich ein Schaumstoffklebeband trotz der Gefahr einer Beschädigung des Schaums bei der Einrahmung zur Versiegelung eignet, sofern dieses Klebeband sowohl einen speziellen Schaum als auch geeignete Klebemassen aufweist, die selbst bereits eine Barriere gegen Wasser / Wasserdampf bereitstellen.

Erfindungsgemäß wurde erkannt, dass sich entgegen der Erfahrung, dass Haftklebemassen basierend auf Silicon eine nur geringe Klebkraft aufweisen, dennoch eine geeignete Klebemasse findet, die eine ausreichende Klebkraft bereitstellt und zudem auch die notwendigen Barriereeigenschaften erfüllt. Eine derartige Siliconklebemasse, insbesondere eine derartige Siliconhaftklebemasse, basiert auf Polysiloxan. Demzufolge weist ein efindungsgemäßes Klebeband eine Schaumstoffschicht aus einem Siliconschaum und zwei Klebschichten auf der Außenseite auf, wobei mindestens eine der Klebeschichten eine Siliconhaftklebemasse gemäß Anspruch 1 aufweist.

Siliconhaftklebmassen bestehend aus Poly(diorgano)siloxanen (z.B. PDMS - Polydimethylsiloxan) und Silikatharzen (MQ Harz) werden mit Toluol oder Xylol verdünnt. Aufgrund der sehr stabilen Si-O-Si Bindung weisen Siliconhaftklebemassen eine exzellente Widerstandsfähigkeit gegenüber Umwelteinflüssen wie UV-Licht, Ozon, Chemikalien und hohen Temperaturen auf und haben somit extrem hohe Lebenszyklen. Darüber hinaus können derartige Siliconhaftklebemassen aufgrund des niedrigen T_{G} von bis zu -120°C auch noch bei Temperaturen von -70°C verarbeitet werden und zeigen zudem exzellente Absorptionseigenschaften gegenüber Erschütterungen, Vibrationen, Lärm und Temperatureinflüssen.

Wenn nur eine Klebemasse eine solche Siliconhaftklebemasse ist, sollte diese so angeordnet sein, dass diese bei der Verklebung in unmittelbarem Kontakt zum Laminat steht. Damit ist die Klebemasse beim Verpressen des Laminats im Rahmen bestmöglich vor Beschädigung geschützt, so dass diese auch bei Beschädigung des mechanisch empfindlichen Schaums nicht beeinträchtigt wird und die Barrierewirkung des Klebebandes somit weiterhin gegeben ist. Besonders bevorzugt ist allerdings eine Ausgestaltung, bei der beide Seiten des Klebebandes eine Siliconhaftklebemasse aufweisen.

Das erfindungsgemäße Klebeband besteht aus einem Siliconschaumstoffkern und weist auf der Außenseite zwei Klebschichten auf, wobei entweder jeweils auf der Ober- und Unterseite eine Siliconhaftklebemasse oder nur auf der Unterseite eine Siliconhaftklebemasse aufgebracht ist. Zusätzlich kann eine Barrierefolie oder weitere Funktionsschichten vorgesehen sein. In bevorzugter Ausgestaltung wird zudem ein Trennmedium wie beispielsweise ein Trennpapier oder eine Trennfolie eingesetzt, um das Klebeband auf sich selbst aufrollen zu können. So erhält man folgende Aufbauten (A) und B) erfindungsgemäß, C) und D) sind Referenzbeispiele):
A) 1. Trennpapier
   2. Siliconhaftklebemasse
   3. Siliconschaum
   4. Siliconhaftklebemasse
B) 1. Trennfolie
   2. Siliconhaftklebemasse
   3. Siliconschaum
   4. Siliconhaftklebemasse
C) 1. Siliconschaum
   2. Siliconhaftklebemasse
   3. Trennpapier
D) 1. Siliconschaum
   2. Siliconhaftklebemasse
   3. Trennfolie

Das Klebeband wird insbesondere in den Fällen A)+B) mit der Haftklebemasse 4., in den Fällen C)+D) mit der Haftklebemasse 2. auf die Laminatkante gedrückt und dann auf die Laminatunter und -oberseite umgeschlagen.

Für den Fachmann nicht vorhersehbar und überraschend ist, dass sich die Wasser- bzw. Wasserdampfmigration zur Laminatkante effektiv durch dieses Klebeband verhindern lässt.

Für Anwendungsbereiche mit besonders großer Belastung durch Temperaturschwankungen eignen sich besonders Silicone mit ihren herausragenden Eigenschaften. Sie weisen neben einer hohen UV- und Ozonbeständigkeit, insbesondere die kombinierten Funktionen aus hoher Temperaturbeständigkeit, Elastizität und ausgeprägtem Dämpfungsverhalten gegenüber Schockeinflüssen und Vibrationen. Darüber hinaus haben Langzeittemperaturbelastungen im Bereich von -75°C bis 260°C keinen negativen Einfluss auf die Materialeigenschaften von Siliconen.

Für die Anwendung von Klebebändern kommen diese herausragenden Materialeigenschaften besonders vorteilhaft zum Tragen, wenn Siliconschäume mit Siliconhaftklebemassen kombiniert werden.

### Klebmassen

Für die Wahl geeigneter Siliconhaftklebemasse stehen sowohl kondensationsvernetzende Siliconhaftklebmassen als auch additionsvernetzende Siliconhaftklebmassen zur Verfügung. Kondensationsvernetzende Siliconhaftklebmassen weisen folgende Komponenten auf:
a) ein hydroxy-funktionalisiertes Organopolysiloxan, welches aus mindestens einer Diorganosiloxaneinheit besteht,
b) ein Organopolysiloxanharz mit der Formel: (R¹₃SiO_{1/2})ₓ(SiO_{4/2})₁.₀, wobei R¹ eine substituierte oder unsubstituierte monovalente Kohlenwasserstoffgruppe, ein Wasserstoffatom oder eine Hydroxygruppe und x eine Zahl zwischen 0,5 und 1,2 ist,
c) ein organisches Lösungsmittel
d) optional eine Peroxoverbindung
e) optional einen Stabilisator

Siliconhaftklebmassen dieser Art sind im Handel frei erhältlich. Beispielhaft seien an dieser Stelle genannt: DC 280, DC 282, Q2-7735, DC 7358, Q2-7406 von Dow Corning, PSA 750, PSA 518, PSA 910, PSA 6574 von Momentive Performance Materials, KRT 001, KRT 002, KRT 003 von ShinEtsu, PSA 45559 von Wacker Silicones sowie PSA 400 und PSA 401 von BlueStar Silicones.

Additionssvernetzende Siliconhaftklebmassen weisen folgende Komponenten auf:
a) ein Organopolysiloxan, welches aus mindestens einer Diorganosiloxaneinheit besteht und mindestens zwei Silicium-gebundene Alkenylgruppen in jedem Molekül trägt,
b) ein Organopolysiloxanharz mit der Formel: (R¹₃SiO_{1/2})ₓ(SiO_{4/2})_{1.0}, wobei R¹ eine substituierte oder unsubstituierte monovalente Kohlenwasserstoffgruppe, ein Wasserstoffatom oder eine Hydroxygruppe und x eine Zahl zwischen 0,5 und 1,2 ist,
c) ein Organopolysiloxan, welches im Mittel wenigstens zwei Silicium-gebundene Wasserstoffatome in jedem Molekül trägt, in einer Menge, dass 0,01 bis 10 Mol Silicium-gebundene Wasserstoffatome pro Mol der gesamten Alkenylgruppen der Komponenten a), b) und e) vorhanden sind und welches frei von olefinischen Doppelbindungen ist,
d) optional ein organisches Lösungsmittel,
e) einen metallorganischen Katalysator der 10. Gruppe des Periodensystems der Elemente
f) optional einem Inhibitor.

Siliconhaftklebmassen dieser Art sind im Handel frei erhältlich. Beispielhaft seien hier genannt: DC 7657, DC 2013 von Dow Corning, KR 3700, KR 3701 von ShinEtsu.

Als Klebrigmacher nutzen erfindungsgemäße Klebmassen als Hauptkomponente insbesondere Organopolysiloxan- oder sogenannte MQ-Harze mit der Formel (R¹₃SiO_{1/2})ₓ(SiO_{4/2})_{1.0}. Als M-Einheit werden darin die (R¹₃SiO_{1/2})-Einheiten bezeichnet, als Q-Einheit die (SiO_{4/2})-Einheiten. Jedes R¹ stellt unabhängig voneinander eine monovalente gesättigte Kohlenwasserstoffgruppe, eine monovalente ungesättigte Kohlenwasserstoffgruppe, eine monovalente halogenierte Kohlenwasserstoffgruppe, ein Wasserstoffatom oder eine Hydroxygruppe dar. Das Verhältnis von M-Einheiten zu Q-Einheiten (M:Q) liegt im Bereich von 0,5 bis 1,2.

Bei den MQ-Harzen handelt es sich vorteilhaft um solche mit einem gewichtsmittleren Molekulargewicht M_{w} von 500 g/mol ≤ M_{w} ≤ 100.000 g/mol, bevorzugt von 1.000 g/mol ≤ M_{w} ≤ 25.000 g/mol [die Angaben des mittleren Molekulargewichtes M_{w} in dieser Schrift beziehen sich auf die Bestimmung per Gelpermeationschromatographie (siehe experimenteller Teil)].

Es hat sich als günstig herausgestellt, wenn Klebemassen eingesetzt werden, bei denen das Anteilsverhältnis - bezogen auf Gewichtsprozent - von Polydiorganosiloxan zu MQ-Harz im Bereich von 20:80 bis 80:20, besser im Bereich von 30:70 bis zu 60:40 liegt.

MQ-Harze dieser Art sind im Handel frei erhältlich. Beispielhaft seien hier genannt: SL 160, SL 200, DC 2-7066 von Dow Corning, SR 545 und SR 1000 und 6031 SL von Momentive Performance Materials, CRA 17, CRA 42 und MQ-Harz 803 von Wacker.

### Weitere Abmischkomponenten

Als weitere Additive des Siliconhaftklebemasse können typischerweise genutzt werden:
- Prozessstabilisatoren, wie zum Beispiel Inhibitoren für den Platinkatalysator
- Prozessbeschleuniger wie zum Beispiel Aminoorganyle
- Füllstoffe, wie zum Beispiel Siliziumdioxid, Glas (gemahlen oder in Form von Kugeln), Aluminiumoxide oder Zinkoxide
- Plastifizierungsmittel, wie zum Beispiel Flüssigharze, Weichmacheröle oder niedermolekulare flüssige Polymere, wie zum Beispiel niedermolekulare Siliconöle mit Molmassen < 1500 g/mol (Zahlenmittel)

Der Feststoffgehalt der Siliconhaftklebemassen liegt insbesondere zwischen 25 und 70 Gew.-%. Vorzugsweise werden handelsübliche Lösungsmittel eingesetzt, insbesondere gesättigte Kohlenwasserstoffe wie Siedegrenzenbenzin oder Heptan und hochsiedende Aromaten wie Toluol und Xyxlol.

### Beschichtung

Die Haftklebemassen können aus Lösung beschichtet werden. Für die Beschichtung aus Lösung wird die Haftklebemasse in gängigen Lösungsmitteln, wie z.B. Toluol, Benzin, etc. gelöst und dann über eine Beschichtungsdüse oder ein Rakel beschichtet. Es können aber auch alle anderen Beschichtungsverfahren eingesetzt werden, die lösungsmittelhaltige Beschichtungen zulassen.

### Vernetzung

Die kondensationsationsvernetzenden Siliconhaftklebmassen werden zur Erzielung einer genügenden Kohäsion insbesondere mit Peroxo-Initiatoren compoundiert. Besonders bevorzugt wird dafür Benzoylperoxid (BPO) in einer Menge von 0,2 bis 5 Gew.% bezogen auf den Festanteil der Siliconklebmasse eingesetzt. Um ein vernünftiges Maß zwischen Kohäsions- und Adhäsionsvermögen zu erzielen, wird insbesondere ein BPO-Gehalt von 0,5 bis 2 Gew.% gewählt. Bei der Lösungsmittelbeschichtung der Klebmasse wird zunächst für mindestens 2 Minuten eine Temperatur von 70-90°C gewählt, um die Lösungsmittel zu verdampfen. Anschließend wird für mindestens 2 Minuten eine Temperatur von 170-180°C eingestellt, um den Peroxidzerfall und so den Vernetzungsprozeß zu initiieren.

Die Erzielung einer ausreichenden Kohäsion für additionsvernetzende Siliconklebmassen erfolgt insbesondere durch eine Platin-katalysierte Hydrosilylierungreaktion zwischen den alkenylfunktionalisierten Organopolysiloxanen und den korrespondierenden SiHfunktionalisierten Organopolysiloxanen. Dabei wird bei der Beschichtung aus Lösung zunächst das Lösungsmittel bei einer Temperatur von 70-90°C und einer Verweilzeit von mindestens 2 Minuten entfernt. Anschließend wird die Temperatur auf 100-120°C erhöht und für bis zu 2 Minuten konstant gehalten.

Zusätzlich zu den klassischen Vernetzungsarten von Siliconhaftklebemassen mittels Peroxiden oder Übergangsmetallkatalyse können diese Klebmassen auch durch aktinische Strahlung, im speziellen Elektronenstrahlen, vernetzt werden. Dabei wird bei der Beschichtung aus Lösung zunächst das Lösungsmittel bei einer Temperatur von 70-90°C und einer Verweilzeit von mindestens 2 Minuten entfernt. Anschließend wird mit einer Elektronenstrahl-Dosis von mindestens 10 kGy vernetzt. Diese Art der Vernetzung ist besonders vorteilhaft, da sich so die Kohäsion nahezu stufenlos einstellen lässt, ohne dass die Eigenschaften Tack und Adhäsion negativ beeinflusst werden (siehe hierzu die Patentanmeldung DE 10 2007 053 432.0).

### Trennfolie

Zum Schutz der offenen Haftklebemasse wird diese bevorzugt mit einer oder mehreren Trennfolien abgedeckt. Neben den Trennfolien könnten - auch wenn nicht sehr bevorzugt - Trennpapiere eingesetzt werden, wie z.B. Glassine-, HDPE- oder LDPE-Trennpapiere, die in einer Auslegung eine Fluoro-Siliconisierung als Trennlage aufweisen.

Die Trennfolie besitzt in einer sehr bevorzugten Auslegung eine Fluoro-Siliconisierung als Trennmittel. Des Weiteren sollte der Folientrennliner eine extrem glatte Oberfläche besitzen, so dass keine Strukturierung der Haftklebemasse durch den Trennliner vorgenommen wird. Dies wird bevorzugt durch die Verwendung von antiblockmittelfreien PET-Folien in Kombination von Fluoro-Siliconsystemen, die aus Lösung beschichtet wurden, erreicht. Neben Fluoro-Siliconsystem kommen Beschichtungen aus fluorierten Kohlenwasserstoffen oder fluorierten Polyethern auf Trennfolien in Betracht.

### Schaum

Das vorliegend beschriebene Klebeband zur Rahmenmontage von PV-Modulen beinhaltet als Trägermaterial einen Siliconschaum. In einer bevorzugten Ausführungsvariante handelt es sich um einen geschlossenzelligen Siliconschaum. Insbesondere sind geschlossenszellige Siliconschäume mit einer Dichte zwischen 180 und 500 kg/m³ (gemessen nach ASTM F 1315), einer Stauchhärte von 35 bis 180 kpa (gemessen nach ASTM D 1056) und einem Druckverformungsrest von kleiner als 1 % (gemessen nach ASTM D 1056) für die Verwendung im erfindungsgemäßen Klebeband geeignet. Des Weiteren hat sich als günstig herausgestellt, einen Siliconschaum zu verwenden, der eine Wasserabsorption von kleiner als 3,5% (ASTM D 471) aufweist und nach SAE J 1960 UV-beständig ist. Die Dicke des Siliconschaums ist in Abhängikeit der Rahmengeometrie und der Laminatdicke frei wählbar. So wird für eine 6 mm weite Rahmennut in Kombination mit einem 5 mm starken Laminat vorzugsweise ein Siliconschaum mit einer Dicke im Bereich von 0,8 bis 1,1 mm verwendet. Geschlossenzellige Siliconschäume sind dem Fachmann an sich bekannt und im Handel frei erhältlich.

Weitere Einzelheiten, Ziele, Merkmale und Vorteile der Erfindung werden nachfolgend anhand eines Ausführungsbeispiels näher erläutert. In der Zeichnung zeigt
- Fig. 1: eine schematische Darstellung eines Testlaminats zur Bestimmung der Leitfähigkeit,
- Fig. 2: die Randverklebung eines PV-Moduls in schematischer Darstellung,
- Fig. 3: den Messaufbau zur Bestimmung der Leitfähigkeit.

### Leitfähigkeitsmessung:

Für die Messung der Leitfähigkeit wurde folgender Messkörper mit den Dimensionen 195 mm x 50 mm hergestellt. Der Messkörper (Laminat (1)) weist auf: eine 4,2 mm dicke Glasschicht (2), 2 Lagen 460 µm EVA-Folie (3, 4) (Etimex Vistasolar FC 486.10), zwischen denen sich eine 50 µm dicke und 25 mm breite Aluminiumfolie (5) befindet, und eine 23 µm Polyesterfolie (6) als Rückseitenfolie. Die Aluminiumfolie (5) wurde in 17 mm Abstand an den kurzen Seiten des Laminats durch eine EVA-Folie (4) und die Rückseitenfolie (6) geführt; zur langen Kante hat die Aluminiumfolie (5) einen Abstand von 17 mm. Die Dicke des Laminats (1) beträgt 5 mm. Das beschriebene Laminat (1) wurde wie folgt hergestellt:
1) 2,5 Minuten bei 40°C, evakuieren auf 20 mbar
2) Bodentemperatur wird innerhalb von 3,5 Minuten von 40°C auf 133°C erhöht, gleichzeitig wird die obere Laminatorfläche auf das Modul gedrückt bis 780 mbar erreicht sind
3) Beim Erreichen von 780 mbar wird eine Vernetzung 13 Minuten bei 133°C und 780 mbar durchgeführt
4) Das Laminat wird für ca. 7 Minuten auf 40°C abgekühlt.

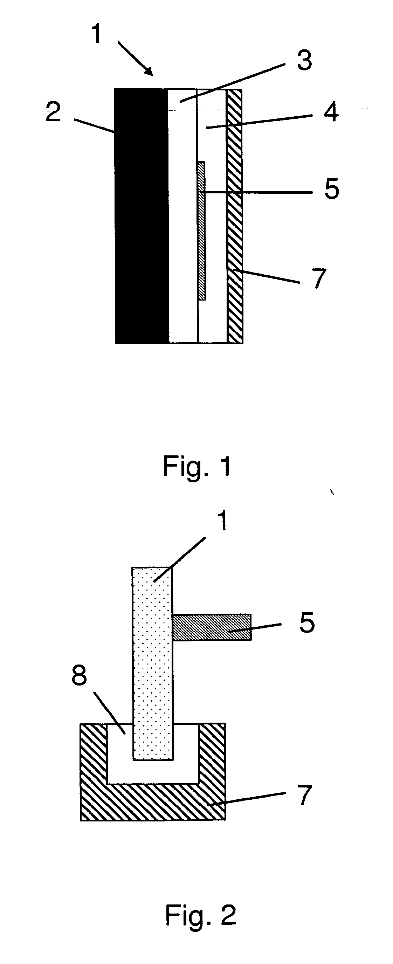

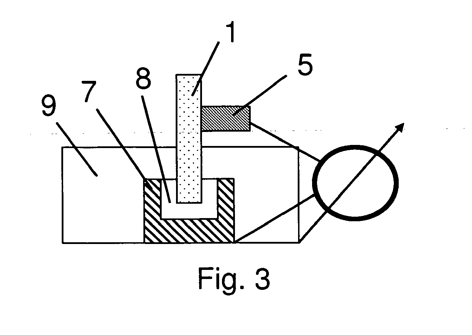

In ein Aluminium U-Profil (Fig. 2) mit einer Nut von 6 mm und einer Tiefe von 10 mm aus 2 mm dicken Aluminium (kurz Rahmen (7)) wird das Laminat (1), welches an der Kante und an der Ober- und Unterseite mit dem zu untersuchenden Klebeband (8) in 19 mm Breite versehen wurde, gepresst. Die Kanten des Laminats (1), welche nicht durch den Rahmen (7) geschützt sind, wurden mit Silicon versiegelt (Firma Lugato "Wie Gummi" Bad-Silicon). Der Messkörper wird mit dem Rahmen (7) in eine Tensid- Lösung (9) aus Liqui Nox/ destilliertem Wasser (1:500) erhältlich bei Alconox, White Plains, NY 10603 gestellt (Fig. 3), nach 2 min. wird mit ein Terraohmmeter (Megaohmmeter Insulation Tester MD 508) bei 500 V der Durchgangswiderstand gemessen.

### Beispiel 1 (Vergleichsbeispiel)

Ein Klebeband mit einem 1000 µm dicken PE Schaum (Alveo) mit einem Raumgewicht von 67 kg/m³ wird beidseitig mit je 50 g/m² einer harzmodifizierten Klebemasse (tesa 4957) ausgerüstet und vermessen.

| | |
|---|---|
| Leitfähigkeitsmessung: | Kurzschluss (Widerstand <0,1 kOhm) |

Das Klebeband hat keine genügende Barrierewirkung, es kann Wasser in die Fuge diffundieren und den Leiter (Aluminiumfolie) mit dem Rahmen kurzschließen.

### Beispiel 2 (Vergleichsbeispiel)

Ein Klebeband mit einem 1000 µm dicken PE Schaum (Alveo) mit einem Raumgewicht von 67 kg/m³ wird beidseitig mit je 50g/m² einer Siliconklebemasse ausgerüstet und vermessen.

| | |
|---|---|
| Leifähigkeitsmessung: | 750 kOhm |

Das Klebeband zeigt verbesserte Barriereeigenschaften, hat aber noch keine ausreichende Barrierewirkung, es kann Wasser in die Fuge diffundieren und den Leiter (Aluminiumfolie) mit dem Rahmen kurzschließen.

### Beispiel 3 (erfindungsgemäß)

Ein Klebeband mit einem 800 µm dicken Siliconschaum mit einem Raumgewicht von 240 kg/m³ wird beidseitig mit je 50 g/m² einer Siliconhaftklebmasse ausgerüstet und vermessen. Man erhält folgenden Produktaufbau:
a) Siliconhaftklebemasse
b) Schaum
c) Siliconhaftklebemasse

Die Klebemasse c) ist der Laminatkante zugewandt.

| | |
|---|---|
| Leitfähigkeitsmessung: | 193 MOhm |

Das Klebeband hat eine ausreichende Barrierewirkung, es kann kein Wasser / Wasserdampf in die Fuge des Laminates diffundieren und den Leiter (Aluminiumfolie) mit dem Rahmen kurzschließen.

### Beispiel 4 (erfindungsgemäß)

Ein Klebeband mit einem 800 µm dicken Siliconschaum mit einem Raumgewicht von 320 kg/m³ wird beidseitig mit je 50 g/m² einer Siliconhaftklebmasse ausgerüstet und vermessen. Man erhält folgenden Produktaufbau:
a) Siliconhaftklebemasse
b) Schaum
c) Siliconhaftklebemasse

Die Klebemasse c) ist der Laminatkante zugewandt.

| | |
|---|---|
| Leitfähigkeitsmessung: | 207 MOhm |

Das Klebeband hat eine ausreichende Barrierewirkung, es kann kein Wasser / Wasserdampf in die Fuge des Laminates diffundieren und den Leiter (Aluminiumfolie) mit dem Rahmen kurzschließen.

### Beispiel 5 (erfindungsgemäß)

Ein Klebeband mit einem 800 µm dicken Siliconschaum mit einem Raumgewicht von 384 kg/m³ wird beidseitig mit je 50 g/m² einer Siliconhaftklebmasse ausgerüstet und vermessen. Man erhält folgenden Produktaufbau:
a) Siliconhaftklebemasse
b) Schaum
c) Siliconhaftklebemasse

Die Klebemasse c) ist der Laminatkante zugewandt.

| | |
|---|---|
| Leitfähigkeitsmessung: | 199 MOhm |

Das Klebeband hat eine ausreichende Barrierewirkung, es kann kein Wasser / Wasserdampf in die Fuge des Laminates diffundieren und den Leiter (Aluminiumfolie) mit dem Rahmen kurzschließen.

## Patentansprüche

1. Klebeband mindestens aufweisend eine Schaumstoffschicht und zwei Klebschichten auf der Außenseite
wobei die Schaumstoffschicht zwischen der oberen und der unteren Klebeschicht angeordnet ist
**dadurch gekennzeichnet,**
**dass** die Schaumstoffschicht als Siliconschaumstoffschicht ausgebildet ist und dass mindestens eine der Klebeschichten eine Siliconhaftklebemasse basierend auf additionsvernetzendem Silicon, aufweisend folgende Komponenten:
a) ein Organopolysiloxan, welches aus mindestens einer Diorganosiloxaneinheit besteht und mindestens zwei Silicium-gebundene Alkenylgruppen in jedem Molekül trägt,
b) ein Organopolysiloxanharz mit der Formel: (R¹₃SiO_{1/2})ₓ(SiO_{4/2})_{1.0}, wobei R¹ eine substituierte oder unsubstituierte monovalente Kohlenwasserstoffgruppe, ein Wasserstoffatom oder eine Hydroxygruppe und x eine Zahl zwischen 0,5 und 1,2 ist,
c) ein Organopolysiloxan, welches im Mittel wenigstens zwei Silicium-gebundene Wasserstoffatome in jedem Molekül trägt, in einer Menge, dass 0,01 bis 10 Mol Silicium-gebundene Wasserstoffatome pro Mol der gesamten Alkenylgruppen der Komponenten a), b) und d) vorhanden sind und welches frei von olefinischen Doppelbindungen ist,
d) ein metallorganischer Katalysator der 10. Gruppe des Periodensystems der Elemente
aufweist.

2. Klebeband nach Anspruch 1, **dadurch gekennzeichnet,**
**dass** die Siliconhaftklebemasse mit aktinischer Strahlung vernetzt ist, vorzugsweise mit Elektronenstrahlen in einer Dosis von mindestens 10 kGy.

3. Klebeband nach einem der vorhergehenden Ansprüche, **dadurch gekennzeichnet,**
**dass** das Anteilsverhältnis des Organopolysiloxans zum Organopolysiloxanharz bezogen auf Gewichtsprozent im Bereich von 20:80 bis 80:20, vorzugsweise im Bereich von 30:70 bis 60:40, liegt.

4. Klebeband nach einem der vorhergehenden Ansprüche, **dadurch gekennzeichnet,**
**dass** die Siliconschaumstoffschicht einen geschlossenzelligen Siliconschaum aufweist, vorzugsweise, dass der Siliconschaum eine Dichte zwischen 180 und 500 kg/m³ aufweist.

5. Klebeband nach einem der vorhergehenden Ansprüche, **dadurch gekennzeichnet,**
**dass** die Siliconschaumstoffschicht eine Schichtdicke im Bereich von 0,5 bis 1,5 mm, vorzugsweise im Bereich von 0,8 bis 1,1 mm aufweist.

6. Verwendung eines Klebebandes gemäß einem der Ansprüche 1 bis 5 zur Verklebung optoelektronischer Bauteile, insbesondere zur Verklebung eines Photovoltaik-Laminats im Rahmen eines Photovoltaik-Moduls.

## Claims

1. Adhesive tape at least comprising a foam layer and two adhesive layers on the outside,
the foam layer being arranged between the top and bottom adhesive layers,
**characterized**
**in that** the foam layer is formed as a silicone foam layer and
**in that** at least one of the adhesive layers comprises a pressure-sensitive silicone adhesive based on addition-crosslinking silicone, comprising the following components:
a) an organopolysiloxane which consists of at least one diorganosiloxane unit and carries at least two silicon-bonded alkenyl groups in each molecule,
b) an organopolysiloxane resin with the formula: (R¹₃SiO_{1/2})x(SiO_{4/2})_{1.0}, where R¹ is a substituted or unsubstituted monovalent hydrocarbon group, a hydrogen atom or a hydroxyl group and x is a number between 0.5 and 1.2,
c) an organopolysiloxane which carries an average of at least two silicon-bonded hydrogen atoms in each molecule, in an amount such that there are 0.01 to 10 mol of silicon-bonded hydrogen atoms present per mole of the total alkenyl groups of components a), b) and d), and which is free from olefinic double bonds,
d) an organometallic catalyst from group 10 of the Periodic Table of the Elements.

2. Adhesive tape according to Claim 1, **characterized in that** the pressure-sensitive silicone adhesive is crosslinked with actinic radiation, preferably with electron beams in a dose of at least 10 kGy.

3. Adhesive tape according to either of the preceding claims, **characterized**
**in that** the proportional ratio of the organopolysiloxane to the organopolysiloxane resin based on weight percent is in the range from 20:80 to 80:20, preferably in the range from 30:70 to 60:40.

4. Adhesive tape according to any of the preceding claims, **characterized**
**in that** the silicone foam layer comprises a closed-cell silicone foam, preferably in that the silicone foam has a density of between 180 and 500 kg/m³.

5. Adhesive tape according to any of the preceding claims, **characterized**
**in that** the silicone foam layer has a layer thickness in the range from 0.5 to 1.5 mm, preferably in the range from 0.8 to 1.1 mm.

6. Use of an adhesive tape according to any of Claims 1 to 5 for adhesively bonding optoelectronic components, more particularly for adhesively bonding a photovoltaic laminate in the frame of a photovoltaic module.

## Revendications

1. Bande adhésive présentant au moins une couche de mousse et deux couches adhésives sur la face externe, la couche de mousse étant disposée entre la couche adhésive supérieure et inférieure, **caractérisée en ce que** la couche de mousse est conçue comme une couche de mousse de silicone et **en ce qu'**au moins une des couches adhésives présente une masse autoadhésive de silicone à base de silicone réticulant par addition, présentant les composants suivants :
a) un organopolysiloxane, qui est constitué par au moins une unité diorganosiloxane et qui porte au moins deux groupes alcényle liés par silicium dans chaque molécule,
b) une résine d'organopolysiloxane de formule (R¹₃SiO_{1/2}) x (SiO_{4/2}) _{1,0}, R¹ représentant un groupe hydrocarboné monovalent substitué ou non substitué, un atome d'hydrogène ou un groupe hydroxy et x valant un nombre entre 0,5 et 1,2,
c) un organopolysiloxane, qui porte en moyenne au moins deux atomes d'hydrogène liés par silicium dans chaque molécule, en une quantité telle qu'il existe 0,01 à 10 moles d'atomes d'hydrogène liés par silicium par mole de la totalité de groupes alcényle des composants a), b) et d) et qui est exempt de doubles liaisons oléfiniques,
d) un catalyseur métallo-organique du 10ème groupe du système périodique des éléments.

2. Bande adhésive selon la revendication 1, **caractérisée en ce que** la masse autoadhésive de silicone est réticulée par un rayonnement actinique, de préférence par des rayons électroniques à une dose d'au moins 10 kGy.

3. Bande adhésive selon l'une quelconque des revendications précédentes, **caractérisée en ce que** le rapport des proportions en pourcentage pondéral de l'organopolysiloxane à la résine d'organopolysiloxane, se situe dans la plage de 20:80 à 80:20, de préférence dans la plage de 30:70 à 60:40.

4. Bande adhésive selon l'une quelconque des revendications précédentes, **caractérisée en ce que** la couche de mousse de silicone présente une mousse de silicone à cellules fermées, de préférence **en ce que** la mousse de silicone présente une densité entre 180 et 500 kg/m³.

5. Bande adhésive selon l'une quelconque des revendications précédentes, **caractérisée en ce que** la couche de mousse de silicone présente une épaisseur de couche dans la plage de 0,5 à 1,5 mm, de préférence dans la plage de 0,8 à 1,1 mm.

6. Utilisation d'une bande adhésive selon l'une quelconque des revendications 1 à 5 pour le collage de pièces optoélectroniques, en particulier pour le collage d'un stratifié photovoltaïque dans le cadre d'un module photovoltaïque.
